(19) Europäisches Patentamt
European Patent Office
Office européen des brevets

(11) Numéro de publication: **0 170 535**
**A2**

(12) **DEMANDE DE BREVET EUROPEEN**

(21) Numéro de dépôt: **85400875.2**

(22) Date de dépôt: **06.05.85**

(51) Int. Cl.⁴: **C 30 B X/**

(30) Priorité: **10.05.84 FR 8407213**

(43) Date de publication de la demande: **05.02.86 Bulletin 86/6**

(84) Etats contractants désignés: **DE GB NL**

(71) Demandeur: **COMMISSARIAT A L'ENERGIE ATOMIQUE**
**Etablissement de Caractère Scientifique Technique et Industriel**
**31/33, rue de la Fédération**
**F-75015 Paris(FR)**

(72) Inventeur: **Barraud, André**
**4, rue des Closeaux**
**F-91440 Bures Sur Yvette(FR)**

(72) Inventeur: **Ruaudel, Annie**
**14, Allée des Frondaisons**
**F-91370 Verrieres Le Buisson(FR)**

(72) Inventeur: **Vandevyver, Michel**
**14, rue du Général de Gaulle**
**F-92290 Chatenay Malabry(FR)**

(74) Mandataire: **Mongrédien, André et al,**
**c/o BREVATOME 25, rue de Ponthieu**
**F-75008 Paris(FR)**

(54) **Procédé de fabrication d'un film mince comportant au moins une couche monomoléculaire de molécules non amphiphiles.**

(57) Procédé de fabrication d'un film comportant au moins une couche monomoléculaire de molécules non amphiphiles.

Ce procédé comprend les étapes suivantes:

a) combiner des molécules non amphiphiles A telles que la pyridine, à des molécules amphiphiles B telles qu'une porphyrine de zinc, pour former un complexe des molécules A et B;

b) former sur la surface d'un liquide une couche monomoléculaire du complexe ainsi obtenu, et

c) transférer la couche monomoléculaire ainsi formée sur un support rigide.

Les molécules A et B peuvent former entre elles un complexe à transfert de charge, par exemple TCNQ-alkyl pyridinium, ce qui permet d'obtenir des structures feuilletées de conducteurs organiques.

EP 0 170 535 A2

Croydon Printing Company Ltd

PROCEDE DE FABRICATION D'UN FILM MINCE COMPORTANT AU MOINS UNE COUCHE MONOMOLECULAIRE DE MOLECULES NON AMPHIPHILES

La présente invention a pour objet un procédé de fabrication d'un film mince comportant au moins une couche monomoléculaire de molécules non amphiphiles.

On rappelle que des molécules "amphiphiles" ou "amphipathiques" sont des molécules organiques possèdant une partie hydrophobe, c'est-à-dire une partie ayant une répulsion pour les liquides polaires tels que l'eau, et une partie hydrophile, c'est-à-dire une partie ayant une affinité pour les liquides polaires tels que l'eau.

Grâce à ces caractéristiques particulières, lorsque l'on introduit des molécules amphiphiles sur la surface d'un liquide tel que l'eau, les molécules s'étalent à la surface du liquide et elles s'orientent de façon que leur partie hydrophile plonge dans l'eau, tandis que leur partie hydrophobe, généralement contituée par une chaîne hydrocarbonée, tend à s'en écarter de sorte que l'axe de la chaîne devient perpendiculaire à la surface de l'eau. Si les forces de cohésion entre molécules sont suffisantes, ces molécules restent groupées et limitent leur étalement à un film monomoléculaire continu ayant sensiblement l'épaisseur d'une molécule, ce qui correspond à un film de Langmuir. De tels films peuvent être manipulés sur la surface de l'eau, puis déposés sur un support solide après avoir été comprimés sous une pression superficielle appropriée, selon la méthode connue de Langmuir Blodgett décrite dans J. of Am. Chem. Soc., vol.57 (1935) p.1007-1010.

On peut utiliser cette méthode pour déposer

sur un support plusieurs couches monomoléculaires de même nature ou de natures différentes. Dans ce cas, les molécules de chacune des couches ont toutes la même orientation et des films constitués par un ensemble de telles couches trouvent des applications intéressantes en électricité, en électronique, etc... en raison de leur structure particulière et de leur organisation.

Cependant, la réalisation de films formés de couches monomoléculaires, par la méthode de Langmuir Blodgett, implique une constitution particulière des molécules à déposer, soit la présence de parties hydrophobe et hydrophile réparties dans la molécule de façon à donner à celle-ci une seule orientation lorsqu'on disperse ces molécules sur la surface d'un liquide polaire tel que l'eau.

Aussi, lorsque l'on veut réaliser des films à partir de molécules non amphiphiles, c'est-à-dire de molécules incapables de s'orienter sur la surface d'un liquide polaire, on ne peut utiliser la méthode de Langmuir Blodgett, et les autres méthodes connues actuellement ne permettent pas de fabriquer des films constitués de couches monomoléculaires de molécules non amphiphiles.

En effet, il est quelquefois possible d'organiser des molécules non amphiphiles, par exemple des molécules de polymère, sous la forme d'une couche monomoléculaire sur la surface d'un liquide, mais on ne peut transférer cette couche sur un support.

De même, les méthodes de condensation qui consistent à évaporer sous vide les molécules non amphiphiles à déposer puis à les condenser sur un support, ne permettent pas d'obtenir le dépôt de molécules organisées en feuillets successifs parallèles au support ; en effet, ces méthodes ne donnent qu'un

dépôt statistique et elles ne fournissent un film continu, qui est d'ailleurs multicristallin, que pour une épaisseur de dépôt de plusieurs centaines d'Å.

Les méthodes d'adsorption qui consistent à mettre un support en présence des molécules non amphiphiles à déposer, dispersées dans un gaz, ou dissoutes dans un solvant, ne permettent de déposer qu'une seule couche complète, car les couches suivantes sont déposées de façon statistique et ont une stabilité précaire. Les techniques d'insertion qui consistent à insérer des molécules entre les feuillets d'un matériau-hôte, tel que le graphite, ne peuvent être utilisées qu'avec certaines molécules et certains matériaux-hôtes massifs. De plus, le découplage entre les plans contenant les molécules insérées est très mal assuré en raison de la minceur des feuillets-hôtes, qui correspond généralement à une monocouche atomique, ce qui interdit certaines utilisations ultérieures des molécules insérées.

La présente invention a précisément pour objet un procédé de fabrication d'un film comportant au moins une couche monomoléculaire de molécules non amphiphiles qui pallie les inconvénients et les insuffisances des procédés précités.

Ce procédé de fabrication d'un film mince comportant au moins une couche monomoléculaire de molécules non amphiphiles A, se caractérise en ce qu'il comprend les étapes suivantes :

a) combiner lesdites molécules non amphiphiles A à des molécules amphiphiles B pour former un complexe des molécules A et B, lesdites molécules amphiphiles B étant capables d'être déposées sur un support sous la forme d'une couche monomoléculaire par la méthode de Langmuir Blodgett,

b) former sur la surface d'un liquide une couche monomoléculaire du complexe ainsi obtenu, et

c) transférer la couche monomoléculaire ainsi formée sur un support rigide.

Selon l'invention, on peut déposer ainsi plusieurs couches monomoléculaires du complexe sur le support rigide afin d'obtenir une structure feuilletée dans laquelle les molécules non amphiphiles A sont organisées, confinées et bloquées entre les couches monomoléculaires successives formées à partir des molécules B.

Ainsi, grâce à la combinaison des molécules non amphiphiles A avec des molécules amphiphiles B, on peut former, selon le procédé de l'invention, des couches monomoléculaires de molécules non amphiphiles par la méthode de Langmuir Blodgett et obtenir en particulier un empilement de couches monomoléculaires de molécules non amphiphiles, ce qui était impossible jusqu'à présent.

Ces molécules non amphiphiles peuvent être ensuite libérées du complexe qu'elles forment avec les molécules A par des réactions chimiques ultérieures, tout en conservant leur structure organisée en couches monomoléculaires, en raison de la présence de la matrice de molécules B organisée en couches lamellaires.

Aussi, selon une variante de l'invention, le procédé comprend une étape supplémentaire consistant à libérer, dans la ou les couches monomoléculaires déposées sur le support rigide, les molécules A du complexe qu'elles forment avec les molécules B. Ceci peut être effectué par voie chimique, par exemple par diffusion ménagée d'un ligand fort tel que $NH_3$, ayant une affinité pour les molécules B supérieure à celle des molécules A.

Il est ainsi possible d'isoler les couches de molécules A qui restent séparées par les couches de molécules B, et d'obtenir des feuillets de molécules A découplés les uns des autres.

Ceci constitue un avantage important car aucun des procédés connus, évoqués ci-dessus ne permet d'organiser des molécules non amphiphiles en couches lamellaires successives et découplées, comportant le nombre de couches voulu qui peut être fixé à l'avance.

Selon l'invention, les molécules amphiphiles B sont choisies de façon à présenter une affinité physique, chimique ou électrique vis-à-vis des molécules A afin de pouvoir former avec celles-ci un complexe relativement stable, susceptible d'être déposé en couches monomoléculaires.

A titre d'exemple, lorsque l'on veut déposer des couches monomoléculaires de molécules non amphiphiles telles que la pyridine, on peut utiliser comme molécules B, des porphyrines métalliques auxquelles la pyridine peut être associée en jouant le rôle de ligand.

Lorsque les molécules non amphiphiles sont par exemple des protéines biologiques, on peut combiner celles-ci avec des molécules d'acides gras qui présentent une affinité importante pour les protéines. Lorsque la molécule non amphiphile à déposer est un acide tel que l'acide propiolique, on peut combiner celles-ci avec des ions organiques amphiphiles tels que l'ion $(docosyl)_4$ tétrapyridinium porphyrine.

Lorsque les molécules non amphiphiles sont des groupes accepteurs ou donneurs d'électrons, on peut combiner celles-ci avec des molécules amphiphiles cosntituées par des groupes donneurs ou accepteurs d'électrons afin de former un complexe à transfert de charge.

On rappelle que les complexes à transfert de charge sont formés par l'association de deux molécules dont, l'une, C, agit comme accepteur d'électrons et, l'autre D, agit comme donneur d'électrons. On peut re-

présenter cette réaction de la façon suivante :

$$mC + nD \longrightarrow C_m^{-\rho} D_n^{+\rho}$$

m et n représentant les nombres respectifs de molécules et $\rho$ le transfert de charge correspondant à la proportion d'électrons transférés.

Si m=n, on a une stoechiométrie simple et si m est différent de n, on a une stoechiométrie complexe.

Si $\rho$ est sensiblement égal à 0, le complexe est un complexe moléculaire à état fondamental neutre.

Si $\rho$ est égal à 1, c'est un vrai composé ionique avec une charge électrique par molécule D ou C, et si $\rho$ est inférieure à 1, il y a moins de charges électriques que de molécules présentes. On a ainsi un composé à valence mixte, condition nécessaire pour obtenir un conducteur organique. On peut alors distinguer :

1° Les vrais complexes à transfert de charge dans lesquels il y a transfert d'un électron du donneur à l'accepteur ; ces électrons célibataires se trouvent alors sur des orbitales π (complexe π-π) ; et

2° Les sels d'ions radicalaires dans lesquels un seul des ions est radicalaire, le contre-ion étant diamagnétique.

Des complexes de ce type sont en particulier décrits dans : Annales de Physique, 1976, tome 1, n°4-5, pages 145 à 256 et dans Journal de Chimie Physique, 1982, 79, n°4. La préparation de ces complexes peut se faire par réaction d'oxydation directe ou par réaction de double échange à partir de sels ioniques diamagnétiques.

Aussi, pour déposer par le procédé de l'invention des couches monomoléculaires formées de composés accepteurs ou donneurs d'électrons non amphiphiles, il suffit de les associer dans un complexe à transfert de charge avec des composés accepteurs ou donneurs d'électrons amphiphiles. Ceci permet, de plus, de fabriquer des films de complexes à transfert de charge conducteurs en couches feuilletées, ce qui n'avait pu être réalisé jusqu'à présent.

Pour mettre en oeuvre le procédé de l'invention, on peut préparer tout d'abord un complexe des molécules A et B par des procédés connus, puis dissoudre les molécules du complexe ainsi obtenu dans un solvant approprié et former ensuite à partir de la solution une couche monomoléculaire par la méthode de Langmuir. Dans le cas où les molécules A et B sont des molécules capables de former un complexe du type à transfert de charge tel que ceux décrits ci-dessus, on commence généralement par synthétiser le complexe, puis on le met en solution pour le déposer sous la forme d'une couche monomoléculaire par la méthode de Langmuir.

On peut aussi former directement le complexe en solution, par exemple, en préparant dans l'étape a) une solution du complexe des molécules A et B par adjonction des molécules A à une solution des molécules B. Dans ce cas, on peut utiliser la solution ainsi obtenue pour former dans l'étape b) une couche monomoléculaire sur la surface d'un liquide par la méthode de Langmuir.

On peut encore former directement le complexe des molécules A et B sur la surface du liquide en ajoutant les molécules A au liquide et en dispersant sur la surface du liquide une solution des molécules B.

Dans ce dernier cas, on réalise parfois simultanément les étapes a) et b), soit la préparation du complexe et la formation d'une couche monomoléculaire de ce complexe en formant tout d'abord sur la surface du liquide une couche monomoléculaire des molécules B et en injectant ensuite les molécules A dans le liquide sous la couche monomoléculaire formée. Lors du dépôt de la couche monomoléculaire sur le support rigide, celle-ci entraîne les molécules A dispersées dans le liquide et l'on obtient ainsi le dépôt d'une couche monomoléculaire du complexe des molécules A et B.

Le procédé de l'invention s'applique à toutes les molécules A non amphiphiles qui sont capables de se combiner par affinité chimique, physique ou électrostatique à des molécules B amphiphiles. Les molécules A peuvent être en particulier des molécules associables à des porphyrines ou des molécules biologiques.

Les molécules amphiphiles B susceptibles d'être utilisées sont des molécules d'un composé organique soufré, azoté, phosphoré ou oxygéné comportant une longue chaîne aliphatique ou aromatique, par exemple des composés comportant d'une part, un radical hydrocarboné en $C_{16}$ à $C_{30}$ et, d'autre part, au moins une fonction choisie parmi les fonctions acide, alcool, aldéhyde, cétone, étheroxyde, amine, thiol, thione, thio-acide et thio-éther.

Ces composés organiques peuvent être des composés aliphatiques, cycliques ou hétéro-cycliques comportant éventuellement une ou plusieurs doubles et/ou triples liaisons.

A titre d'exemple de molécules B susceptibles d'être utilisées, on peut citer :

- les acides gras de formule R-COOH avec R représentant un radical hydrocarboné saturé ou insaturé, linéaire ou ramifié, en $C_{16}$ à $C_{30}$, comme l'acide stéarique, l'acide béhénique et l'acide arachidique ;

- les amines aliphatiques ou aromatiques et leurs dérivés, par exemple les amines de formule $R-NH_2$ dans laquelle R représente un radical hydrocarboné saturé ou insaturé en $C_{16}$ à $C_{30}$, les phénantrolines, les porphyrines, les métalloporphyrines, les pyridines, les bipyridines, etc...
- des alcools de formule $R-CH_2OH$ dans laquelle R est un radical hydrocarboné saturé ou insaturé, linéaire ou ramifié, comportant 16 à 30 atomes de carbone ; et
- des composés phosphorés, comme les polyphosphates et les polyphosphonates organiques.

Les supports utilisés dans l'invention pour le dépôt des couches monomoléculaires, sont des supports rigides présentant une affinité suffisante vis-à-vis d'au moins l'une des molécules A et B à déposer. Le support peut être réalisé par exemple en verre, en quartz, en $CaF_2$, en matière plastique, en métal comme l'aluminium, l'acier inoxydable, le nickel, le cuivre, etc...

Dans le procédé de l'invention, on utilise la technique connue de Langmuir Blodgett pour préparer sur la surface d'un liquide puis déposer sur le support rigide les couches monomoléculaires des molécules A et B. Le liquide de la cuve est un liquide polaire, généralement de l'eau, et l'on comprime les couches sous une pression superficielle appropriée en utilisant des dispositifs classiques, par exemple une réglette mobile ou des pièces cylindriques telles que celles dù brevet français FR-A-2341 199 déposé le 11 février 1976 au nom du Commissariat à l'Energie Atomique.

Les exemples suivants sont donnés bien entendu à titre non limitatif pour illustrer l'invention.

EXEMPLE 1

Couche monomoléculaire à base de pyridine.

Dans cet exemple, les molécules non amphiphiles A sont des molécules de pyridine et les molécules amphiphiles B sont des molécules de porphyrine de zinc.

La porphyrine de zinc est tout d'abord dissoute dans du chloroforme de façon à obtenir une solution contenant $5.10^{-5}$ $mol.l^{-1}$ de porphyrine de zinc. On ajoute alors à la solution 5% en volume de pyridine pour former le complexe de pyridine et de porphyrine de zinc. On répand la solution ainsi obtenue sur de l'eau dans une cuve de Langmuir et l'excès de pyridine non complexé passe dans l'eau. On comprime ensuite la couche monomoléculaire formée sur la surface de l'eau à une pression de 35 mN/m et on la transfère alors sur un support solide en $CaF_2$. Après dépôt sur le support, on contrôle par spectroscopie visible que la pyridine a bien été transférée sur le support solide, ceci est mis en évidence par le déplacement de la bande de Soret de la porphyrine.

Si l'on veut libérer les molécules de pyridine déposée en couches monomoléculaires sur le support, on peut les libérer "in situ" du complexe par diffusion ménagée d'un ligand fort tel que l'ammoniac.

EXEMPLE 2 : Couche monomoléculaire contenant des protéines.

Dans ce cas, les molécules A sont des molécules de protéines biologiques et on les dépose en couches monomoléculaires après les avoir complexées avec des molécules B constituées par de l'acide béhennique.

Dans cet exemple, les protéines biologiques sont constituées par des extraits de membranes cellulaires provenant d'une bactérie photosynthétique,

soit des chromatophores de Rhodopseudomonas Sphaeroides GA.

On prépare tout d'abord une solution d'acide béhénique dans le chloroforme contenant $5.10^{-4}$ mol.$l^{-1}$ d'acide béhénique et on étale cette solution sur la surface de l'eau d'une cuve de Langmuir de façon à former une couche monomoléculaire que l'on comprime à 35 mN/m. On injecte alors une solution concentrée des extraits de membranes cellulaires à travers le film d'acide béhénique sous la surface de l'eau en utilisant une seringue à aiguille courbe, puis on dépose la couche monomoléculaire sur un support en quartz. Par spectroscopie optique ou infrarouge, on constate que la couche d'acide béhénique a entraîné avec elle une couche de membrane cellulaire sous-jacente qui reste organisée après dépôt.

La réalisation d'une telle monocouche de protéines est intéressante, en raison de sa structure organisée, pour l'étude des propriétés de divers composants de la membrane cellulaire tels que les colorants, les protéines, les molécules insaturées etc...

<u>EXEMPLE 3</u>. Couches monomoléculaires formées à partir d'acide propiolique.

Dans ce cas, les molécules A sont les molécules d'acide propiolique et les molécules amphiphiles B sont des molécules de bromure de $(docosyl)_4$ tétrapyridinium porphyrine.

On prépare d'abord une solution de chloroforme contenant $5.10^{-5}$ mol.$l^{-1}$ de bromure de $(docosyl)_4$ tétrapyridinium porphyrine, et on ajoute de l'acide propiolique à l'eau d'une cuve de Langmuir de façon à obtenir un bain ayant une concentration en acide propiolique de $10^{-3}$ mol.$l^{-1}$. On répand alors la solution de chloroforme à la surface du bain de façon à former une couche monomoléculaire que l'on comprime

sous une pression de 35 mN/m et on transfère cette couche sur un support en $CaF_2$. On dépose ainsi plusieurs couches sur le support, et on vérifie par spectrophotométrie infrarouge la présence de propiolate sur les couches monomoléculaires déposées.

Ceci est mis en évidence par spectrophotométrie infrarouge de la fonction carboxylate et de la triple liaison du propiolate. Ainsi, le bromure de $(docosyl)_4$ tétrapyridinium porphyrine a échangé ses ions bromures contre des ions propioliques.

Le support ainsi revêtu peut être utilisé pour étudier par exemple la chimie de la triple liaison à l'état solide.

EXEMPLE 4. Couches monomoléculaires d'un complexe à transfert de charge alkyl quinolinium-tétracyanoquinodiméthane (TCNQ).

Dans ce cas, les molécules A sont constituées par le TCNQ et les molécules B par des molécules de $N-C_{22}H_{45}$-quinolinium. On synthétise tout d'abord le complexe TCNQ-alkyl quinolinium à partir de l'iodure correspondant d'alkyl quinolinium et du sel de lithium de TCNQ en milieu alcoolique. On purifie le complexe obtenu par lavage à l'éther et on le recristallise On le dissout alors dans du chloroforme pour obtenir une solution contenant $1.10^{-3}$ $mol.l^{-1}$ de ce complexe, et on la répand sur la surface de l'eau d'une cuve de Langmuir. On forme ainsi une couche monomoléculaire que l'on comprime à 30 mN/m et que l'on dépose ensuite sur un support en $CaF_2$. On contrôle par absorption infrarouge des triples liaisons du TCNQ la présence de ce TCNQ dans les couches déposées.

EXEMPLE 5. Couches monomoléculaires de TCNQ-alkyl pyridinium.

Dans ce cas, les molécules A sont du TCNQ et les molécules B un alkyl pyridinium. Comme dans

l'exemple 4, on prépare tout d'abord le complexe TCNQ-alkyl pyridinium, puis on le met en solution dans du chloroforme pour obtenir une concentration de $1.10^{-3}$ $mol.l^{-1}$ de complexe. On forme ensuite une couche monomoléculaire du complexe comme dans l'exemple 4, puis on comprime la couche sous 27 mN/m et on la dépose sur un substrat en $CaF_2$.

Les résultats obtenus en utilisant différents alkylpyridinium, soient les

$N-C_{18}H_{37}$-pyridinium

$N-C_{20}H_{41}$-pyridinium

$N-C_{22}H_{45}$-pyridinium

confirme la présence du TCNQ dans les couches déposées. On précise que le TCNQ seul ne peut être déposé en couches monomoléculaires par la méthode de Langmuir Blodgett. En effet, lorsqu'on le dépose sur la surface de l'eau à partir d'une solution, il se rassemble en cristaux à facettes géométriques éparpillées sur la surface et ne forme donc pas de film.

REVENDICATIONS

1. Procédé de fabrication d'un film comportant au moins une couche monomoléculaire de molécules non amphiphiles A, caractérisé en ce qu'il comprend les étapes suivantes :

a) combiner lesdites molécules non amphiphiles A à des molécules amphiphiles B pour former un complexe des molécules A et B, lesdites molécules B étant capables d'être déposées sur un support sous la forme d'une couche monomoléculaire par la méthode de Langmuir Blodgett,

b) former sur la surface d'un liquide une couche monomoléculaire du complexe ainsi obtenu, et

c) transférer la couche monomoléculaire ainsi formée sur un support rigide.

2. Procédé selon la revendication 1, caractérisé en ce que dans l'étape a), on prépare une solution du complexe des molécules A et B, en ajoutant les molécules A à une solution des molécules B.

3. Procédé selon la revendication 2, caractérisé en ce que dans l'étape b), on utilise la solution obtenue dans l'étape a) pour former une couche monomoléculaire sur la surface d'un liquide par la méthode de Langmuir.

4. Procédé selon la revendication 1, caractérisé en ce que l'on forme directement le complexe des molécules A et B sur la surface du liquide, en ajoutant les molécules A au liquide et en dispersant sur la surface du liquide une solution des molécules B.

5. Procédé selon la revendication 4, caractérisé en ce que l'on forme tout d'abord sur la surface du liquide une couche monomoléculaire des molécules B et en ce que l'on injecte ensuite les molécules A

dans le liquide, sous la couche monomoléculaire formée.

6. Procédé selon l'une quelconque des revendications 1 à 5, caractérisé en ce qu'il comprend une étape supplémentaire consistant à libérer, dans la ou les couches monomoléculaires déposées sur le support rigide les molécules A du complexe qu'elles forment avec les molécules B.

7. Procédé selon l'une quelconque des revendications 1 à 5, caractérisé en ce que les molécules B sont des molécules d'un composé organique comportant d'une part un radical hydrocarboné en $C_{16}$ à $C_{30}$ et, d'autre part, au moins une fonction choisie parmi les fonctions acide, alcool, aldéhyde, cétone, éther oxyde, amine, thiol, thione, thio-acide et thio-éther.

8. Procédé selon la revendication 1, caractérisé en ce que les molécules A sont des molécules de composés accepteurs d'électrons et les molécules B sont des molécules de donneurs d'électrons amphiphiles capables de se combiner avec les molécules A pour former un complexe à transfert de charge.

9. Procédé selon la revendication 4, caractérisé en ce que les molécules A sont des molécules de tétracyanoquinodiméthane (TCNQ) et les molécules B sont des molécules d'alkyl pyridinium.

10. Procédé selon la revendication 2, caractérisé en ce que les molécules A sont des molécules associables à des porphyrines.

11. Procédé selon la revendication 5, caractérisé en ce que les molécules A sont des molécules biologiques.

12. Procédé selon la revendication 11, caractérisé en ce que les molécules B sont des molécules d'acide gras.

13. Procédé selon l'une quelconque des revendications 10 et 11, caractérisé en ce que les molécules B sont des molécules de porphyrine ou de dérivés de porphyrine.